# EUROPEAN PATENT APPLICATION

(11) **EP 2 413 509 A1**
(43) Date of publication of application: **01.02.2012**
(21) Application number: 10756154.0
(22) Date of filing: 25.03.2010
(51) Int. Cl.: H04B 1/16

(54) **RECEPTION DEVICE, PROGRAM, AND RECEPTION METHOD**

(30) Priority: 27.03.2009 JP 2009080547; 10.03.2010 JP 2010053701
(71) Applicant: JVC KENWOOD Corporation, Yokohama-shi, Kanagawa 221-0022 (JP)
(72) Inventor: KUGA Koji, Yokohama-shi Kanagawa 221-0022 (JP); HATTORI Hiroyuki, Yokohama-shi Kanagawa 221-0022 (JP); SUGA Kunihiro, Yokohama-shi Kanagawa 221-0022 (JP)
(74) Representative: Leinweber & Zimmermann
(86) International application number: PCT/JP2010/055191
(87) International publication number: WO 2010/110358

(57) **Abstract**

A reception device provided with a broadcast reception unit which receives a broadcast at an instructed frequency, reproduces the broadcast, and outputs the result (steps 404, 413, 417, 418, 420, 421); a signal level judgment unit which judges whether the signal level of the broadcast is a predetermined value or higher (steps 414 to 416); and a content reception unit which receives content distributed by a predetermined network, reproduces the content, and outputs the result, said content being permitted to be viewed under the condition that the signal level of the broadcast is a predetermined value or higher (steps 405 to 412, 422 to 424); wherein, after a reception frequency has been instructed (step 404), the content reception unit performs the processing necessary for receiving and outputting content (steps 405 to 412), in parallel to the period until judgment of the signal level has been made (step 416). This reception device improves the user-friendliness of broadcast receivers.

## Description

### TECHNICAL FIELD

The present invention relates to a reception device capable of receiving a broadcast and contents distributed in parallel to the broadcast.

### BACKGROUND ART

In the past, in digital terrestrial television broadcasting, IP retransmission by which the same content of screen images and sound as a broadcast are distributed in almost real time is performed by a dedicated IP communication network. In IP retransmission, since broadcasting service areas are defined by law, distribution to the outside of broadcasting service areas approved to broadcast stations is impossible. Therefore, distribution areas through a closed communication network different from the Internet, which is referred to as an NGN (Next Generation Network), are controlled to prevent contents from being distributed to the outside of the broadcasting service areas.

Methods for restricting areas where content distribution is performed include a method for restricting the distribution of contents by a relay within a communication network as in the IP retransmission, and a method in which a receiver or a server on the Internet judges whether the area falls under the broadcasting service area of contents to be viewed, and only if the area falls under the broadcasting service area, the contents are presented (e.g., see Patent Literature 1 and Patent Literature 2). In this case, when it is judged that the receiver is located outside of the broadcasting service area, the receiver displays a message that the contents cannot be viewed because the receiver is outside of the broadcasting service area, and does not present the contents.

In addition, a technique is known, in which as in the IP retransmission in the digital terrestrial television broadcasting, in a system in which the identical contents are distributed on a broadcast network and a communication network, if the quality of the reception from the broadcast network is degraded, switching is performed so that the contents are received from the communication network (e.g., see Patent Literature 3). Also in this case, when the restriction of the broadcasting service area in the broadcast network is reflected, and the broadcast is received from the communication network, viewing is permitted only within the broadcasting service area.

### Citation List

### Patent Literature

Patent Literature 1: Japanese Patent Application Laid-Open No. 2008-182604
Patent Literature 2: Japanese Patent Application Laid-Open No. 2008-288814
Patent Literature 3: Japanese Patent Application Laid-Open No. 2005-136879

### SUMMARY OF INVENTION

### TECHNICAL PROBLEM

However, according to the techniques of Patent Literature 1 and Patent Literature 2, if a message is displayed indicating that the contents of which viewing is desired are not permitted to be viewed because a receiver is outside of the broadcasting service area, any other screen image and sound also cannot be viewed. This means that, depending on the current position of a receiver, no contents can be viewed at all, reducing the convenience of the receiver, and there may be no reason that the viewer has the receiver. That is to say, when the output of the broadcasting contents through the Internet is prohibited, nothing is output, therefore, convenience is low.

In addition, according to the technique of Patent Literature 3, there is a problem that if the broadcast that is transmitted through a broadcast network is the conventional analog broadcasting, the quality of the analog broadcasting is usually lower than that of a broadcast transmitted through a mobile communication network or the Internet, therefore, the receiver receives the analog broadcasting in priority, which provides lower quality. That is to say, if the quality of the contents on the broadcast network side is low, switching to the mobile communication network is performed to output the contents from the mobile communication network; however, if the broadcast wave from the broadcast network is an analog broadcast wave, the quality of the contents of the analog broadcast wave is usually lower than that of the broadcast contents through the Internet; therefore, a user views the low-quality broadcast in priority.

The objective of the present invention is to provide a broadcast receiver, a control method and a program capable of improving the user-friendliness of broadcast receivers.

### SOLUTION TO PROBLEM

In order to achieve the objective of the invention, a reception device according to a first aspect of the present invention basically includes a broadcast reception unit to receive a broadcast at an instructed frequency, reproduce the broadcast, and output the result; a signal level judgment unit for judging whether the signal level of the broadcast is a predetermined value or higher; and a contents reception unit to receive contents distributed by a predetermined network, reproduce the contents, and output the result, the contents being permitted to be viewed under the condition that the signal level of the broadcast is a predetermined value or higher, wherein after a reception frequency has been instructed, the contents reception unit performs the processing necessary for receiving and outputting the contents, in parallel to the period until judgment of the signal level has been made.

In the reception device, the processing necessary for receiving and outputting the contents includes processing for establishing the communication with a server that distributes the contents and performing predetermined authentication.

In addition, in the reception device according to the present invention, preferably, the processing necessary for receiving and outputting the contents includes processing from acquisition of information for accessing the contents to start of reproduction of the contents.

Further, preferably, in the reception device according to the present invention, the period further includes a period of confirming whether the current position is within a broadcasting service area of the broadcast.

Moreover, preferably, in the reception device according to the present invention, the contents are distributed, scheduled to be distributed into the broadcasting service area of the broadcast by a broadcast service provider of the broadcast in parallel to the broadcast.

Furthermore, preferably, the reception device according to the present invention includes a controller for, after the contents reception unit starts reproducing and outputting the contents, when the signal level judgment unit judges that the signal level of the broadcast becomes lower than the predetermined value, causing the contents reception unit to stop the output of the contents while continuing the reception of the contents, and the broadcast reception unit to start the output, and then, when the signal level judgment unit judges that the signal level of the broadcast becomes the predetermined value or higher, causing the broadcast reception unit to stop the output, and the contents reception unit to start the output of the contents.

Further, a reception device according to a second aspect of the present invention includes a broadcast reception unit to receive a broadcast at an instructed frequency, reproduce the broadcast, and output the result; a signal level judgment unit for judging whether the signal level of the broadcast is a predetermined value or higher; a contents reception unit to receive contents distributed by a predetermined network, reproduce the contents, and output the result, the contents being permitted to be viewed under the condition that the signal level of the broadcast is a predetermined value or higher; and a controller for, after the contents reception unit starts reproducing and outputting the contents, when the signal level judgment unit judges that the signal level of the broadcast becomes lower than the predetermined value, causing the contents reception unit to stop the output of the contents while continuing the reception of the contents, and the broadcast reception unit to start the output, and then, when the signal level judgment unit judges that the signal level of the broadcast becomes a predetermined value or higher, causing the broadcast reception unit to stop the output, and the contents reception unit to start the output of the contents.

In addition, the present invention also provides a program according to a third aspect for causing a computer to function as a reception device according to the first and second aspects.

Further, a reception method according to a fourth aspect of the present invention includes a broadcast reception step of receiving a broadcast at an instructed frequency, and reproducing the broadcast, and outputting the result; a signal level judgment step of judging whether the signal level of the broadcast is a predetermined value or higher; and a content reception step of receiving contents distributed by a predetermined network, reproducing the contents, and outputting the result, the contents being permitted to be viewed under the condition that the signal level of the broadcast is a predetermined value or higher, wherein after a reception frequency has been instructed, in the content reception step, the processing necessary for receiving and outputting the contents is performed, in parallel to the period until judgment of the signal level has been made.

### ADVANTAGEOUS EFFECTS OF INVENTION

According to the present invention, an effect can be obtained in which the user-friendliness of broadcast receivers can be improved.

### BRIEF DESCRIPTION OF DRAWINGS

[FIG. 1] FIG. 1 is a diagram showing a configuration of a system according to a first embodiment of the present invention.
[FIG. 2] FIG. 2 is a block diagram showing a configuration of a receiver in the system of FIG. 1.
[FIG. 3] FIG. 3 is a diagram showing an example of a URL database stored in the receiver of FIG. 2.
[FIG. 4] FIG. 4 is a flow chart showing channel selection processing in the receiver of FIG. 2.
[FIG. 5] FIG. 5 is a flow chart showing reception level monitoring processing in the receiver of FIG. 2.
[FIG. 6] FIG. 6 is a diagram showing an effect of the channel selection processing of FIG. 4.
[FIG. 7] FIG. 7 is a diagram showing an effect of the reception level monitoring processing of FIG. 5.
[FIG. 8] FIG. 8 is a flow chart showing another example of channel selection processing.

### DESCRIPTION OF EMBODIMENTS

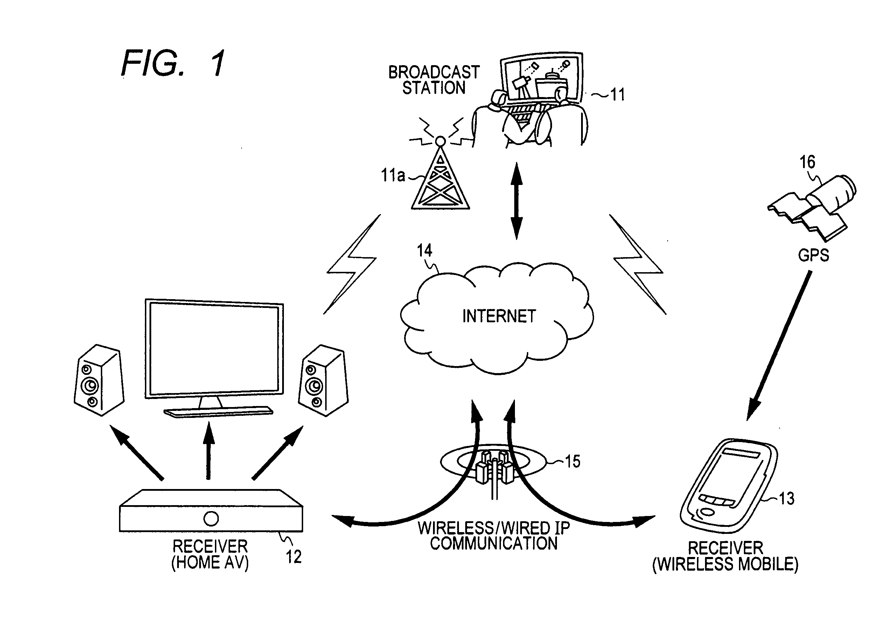

FIG. 1 shows a configuration of a system according to an embodiment of the present invention. In FIG. 1, the reference numeral 11 denotes a broadcast station for broadcasting a program produced by a broadcast service provider, 12 a stationary type receiver by which a viewer receives the program broadcast by the broadcast station 11, 13 a mobile type receiver by which the viewer receives the program broadcast by the broadcast station 11, 14 and 15 the Internet and a wireless or wired IP communication network between the broadcast station 11 and the receiver 12 or receiver 13, and 16 a GPS satellite for providing position information to the receiver 13. The broadcast station 11 has a broadcast network 11a including a transmitting station and a relay station.

The broadcast service provider broadcasts a program recorded in advance and a live program by the broadcast station 11 through the broadcast network 11a. At that time, in parallel to the broadcast of a program, under the condition that the program is permitted to be viewed only within the broadcasting service area of the broadcast, the broadcast service provider provides a service of distributing predetermined contents to the receivers 12 and 13 by an IP broadcast and the like through the Internet 14 (hereinafter referred to as an "Internet service"). The predetermined contents correspond to, for example, contents with the same content as a program that is to be broadcast in parallel thereto, and contents to which another content is added. Specifically, when the broadcast by the broadcast network 11a is the analog terrestrial radio broadcasting, the predetermined contents correspond to audio contents with the same content as the broadcast program, and contents to which screen images, stationary images, advertisement and the like are added. The contents may have no relation to the broadcast program.

In providing the Internet service, the format of screen image and audio data constituting the contents that are to be distributed is converted into the data format suitable for distribution through the Internet. The receivers 12 and 13 can perform reproduction and output based on the Internet service corresponding to the broadcast only when it is confirmed that the receivers exist in the broadcasting service area of the broadcast to be received. The broadcasting service area means "a given area where the broadcast of the identical broadcast program is permitted to be received concurrently" which is defined in Broadcast Law. Whether the area exists in the broadcasting service area is confirmed based on the reception signal level of the broadcast and success or failure of predetermined authentication.

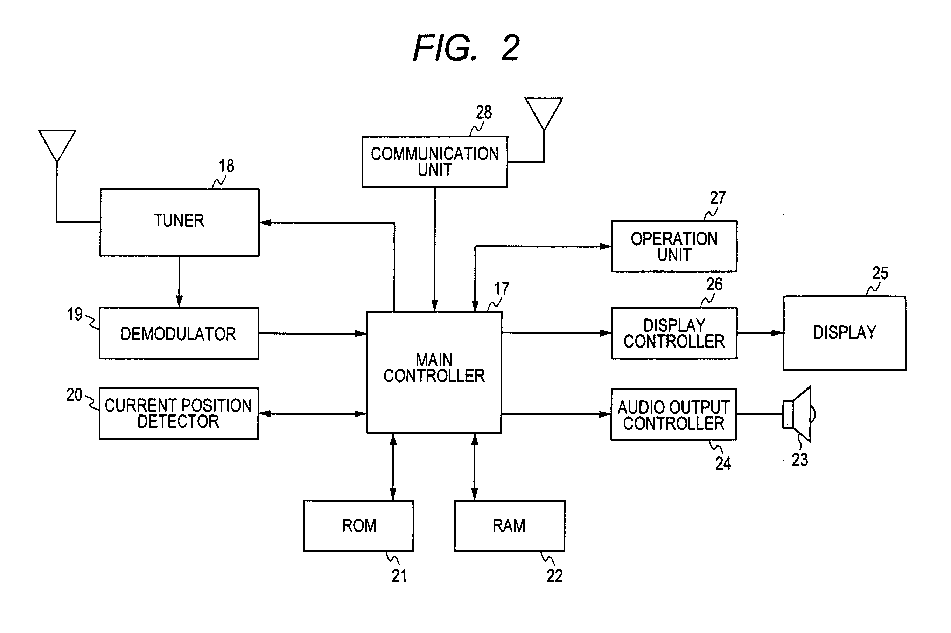

FIG. 2 is a block diagram showing the configuration of the receivers 12 and 13. As shown in FIG. 2, the receiver includes a main controller 17 for controlling respective components of the receiver, a tuner 18 for receiving the instructed frequency according to the instruction of the main controller 17, a demodulator 19 for demodulating and supplying a signal received by the tuner 18 to the main controller 17, a current position detector 20 for acquiring and supplying the current position to the main controller 17 according to the instruction of the main controller 17, a ROM 21 for storing a program and data used by the main controller 17, a RAM 22 used by the main controller 17 as a work space, a speaker 23 for outputting audio, an audio output controller 24 for, according to the instruction of the main controller 17, supplying a speech signal to the speaker 23 and controlling the output of the speech signal, a display 25 for displaying images and text, a display controller 26 for, according to the instruction of the main controller 17, supplying a video signal to the display 25 and controlling the display by the display 25, an operation unit 27 for performing an instruction operation to the main controller 17, and a communication unit 28 for enabling the main controller 17 to access a server on the Internet. The current position detector 20 acquires the current position using a GPS receiver.

The main controller 17 causes the tuner 18 to receive a broadcast that is transmitted by the broadcast station 12 through the broadcast network 11a, and, in parallel thereto, receives from the communication unit 28 contents distributed by the Internet service of the broadcast station 12. At that time, in order to permit to view the contents only within the broadcasting service area of the broadcast, only when it is confirmed that the broadcast can be sufficiently received, the contents are reproduced and output to permit a user to view the contents. If the broadcast wave cannot be received from the broadcast network 11a, or sufficient reception quality cannot be ensured, it is considered that the area is outside of the broadcasting service area for the broadcast, and reproduction and output of the corresponding contents are not performed.

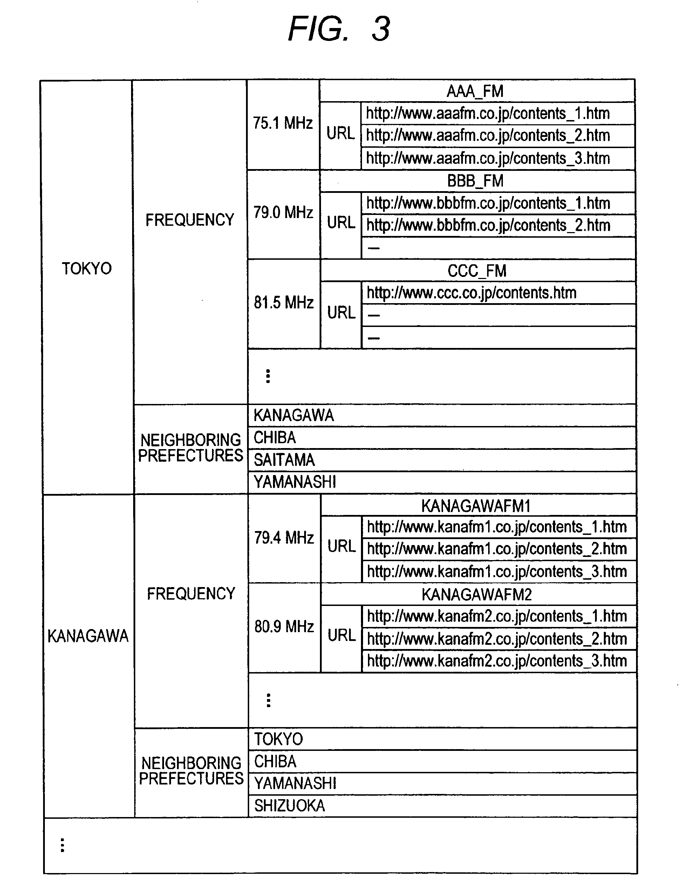

FIG. 3 shows an example of a URL database stored in the ROM 21. In the URL database, the frequency of each broadcast station, the name of the broadcast station and URLs of resources related to the Internet service provided by the broadcast station are registered on a per-prefecture basis. In Fig. 3, a state is shown in which for "Tokyo", for example, the reception frequency of each broadcast station such as "AAA_FM", "BBB_FM" and "CCC_FM" and URLs are registered. The main controller 17 refers to the URL database based on the current position and the frequency during reception to acquire the URL related to the Internet service by the broadcast station at the frequency. For example, if the current position is "Tokyo", and the current reception frequency is at "81.5MHz", the broadcast station during reception is "CCC_FM", therefore, "http:www.ccc.co.jp/contents.htm" can be acquired as the URL related to the Internet service.

In the URL database, sometimes a plurality of URLs are associated with one broadcast station. In this case, the broadcast station provides the Internet service through the plurality of URLs. In this case, according to the instruction of the user, the main controller 17 accesses the server indicated by each URL in order to change the contents that the user views. For the broadcast station that transmits only one IP broadcast as the Internet service, only one URL is registered. The broadcast station for which no URL is registered provides no Internet service. In this case, the main controller 17 unconditionally performs reproduction and output based on the broadcast wave.

Since URL information for each broadcast station is managed on a per-prefecture basis in the URL database, when the main controller 17 refers to the URL database, each current position acquired by the current position detector 20 must be associated with each prefecture. If the current position acquired by the current position detector 20 is represented by latitude and longitude, when the receiver is incorporated into a device having a function for defining its prefecture like a car navigation system, the function is used to define the prefecture corresponding to the latitude and longitude. Even if such a function cannot be used, by inquiring of the server on the Internet having the function for defining corresponding prefecture based on the latitude and longitude, the name of the prefecture can be acquired.

Note that although in the URL database, the URL related to the Internet service is registered, instead, other information enabling the access to the resource related to the Internet service, for example, the IP address of the server that provides the Internet service may be registered. In addition, although URL information for each broadcast station is managed on a per-prefecture basis, the category of a city, town, or village also may be provided below the prefecture category, and the combination of them may be used to manage the URL information. Further, although URL information for each broadcast station is managed on a per-prefecture basis since Japanese broadcast stations are approved to broadcast on a per-prefecture basis, without limiting thereto, management on the basis of other predetermined areas, for example, on a basis that is suitable for the actual condition of the area, such as nation, state, country, city and town, is appropriate. Further, although one frequency is associated with one broadcast station, there is a case where one broadcast station broadcasts from a plurality of relay stations at different frequencies; therefore, a plurality of frequencies may be associated with one broadcast station.

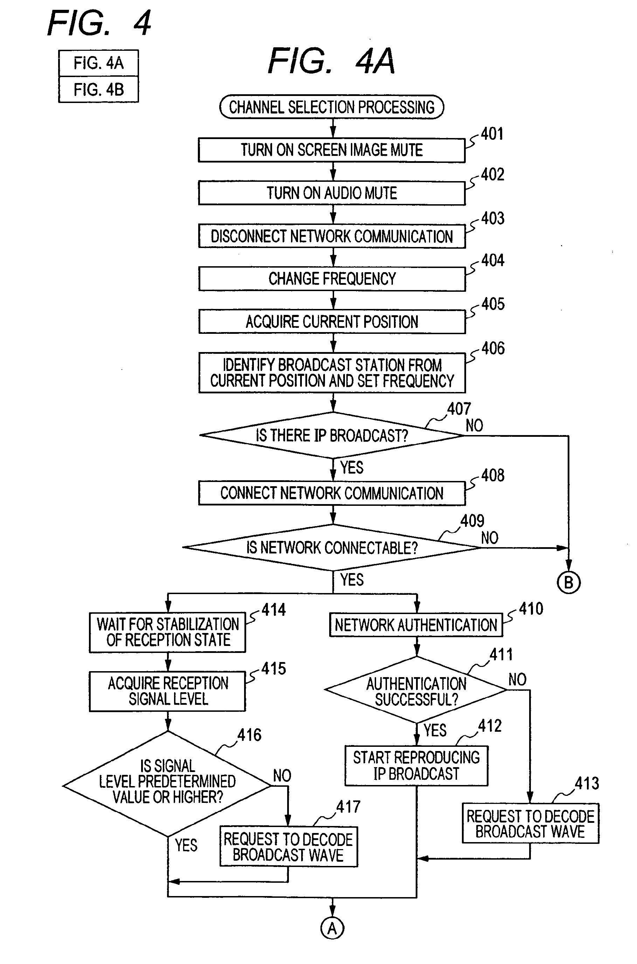

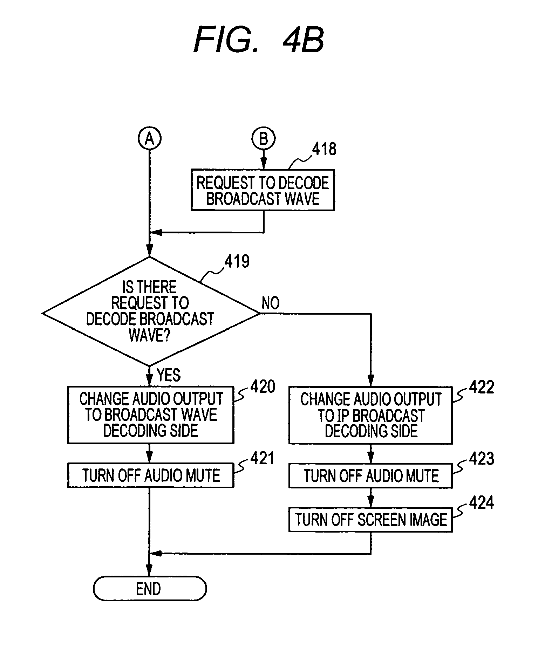

FIG. 4 is a flow chart showing channel selection processing by the main controller 17 in the receiver 12 or 13. This processing is performed in response to the selection of the broadcast station 11 from which the user views contents according to a predetermined program stored in the ROM 21. In this processing, the receiver 12 or 13 receives the analog terrestrial radio broadcasting from the broadcast station 11, and, if a predetermined condition is met, as a corresponding Internet service, the receiver can receive the contents distributed by the IP broadcast.

That is to say, when the selection operation of the frequency for the broadcast station from which the user wants to view contents is performed by the operation unit 27, in response thereto, the main controller 17 first stops the output of the screen image and audio based on the broadcast wave or IP broadcast that has been received until then (steps 401 and 402). Further, if the IP broadcast has been received until then, the connection with the server that is transmitting the IP broadcast has been established, therefore, the connection with the server is disconnected (step 403). Next, the tuner 18 is instructed to change the reception frequency to the selected frequency (step 404).

Next, the current position detector 20 acquires the current position (step 405). Next, based on the acquired current position and selected frequency, the URL database is referred as described above to define the broadcast station of the frequency (step 406), and whether the broadcast station is transmitting the IP broadcast is judged (step 407). This judgment is performed depending on whether the URL associated with the broadcast station is registered in the URL database as described above. If it is judged that no IP broadcast is being transmitted, a request to start decoding the broadcast wave after the frequency change is made to the demodulator 19 (step 418), and the procedure proceeds to step 419.

If it is judged that the IP broadcast is being transmitted in step 407, in order to access the resource of the URL related to the IP broadcast, an attempt to establish the communication with the server indicated by the URL is made (step 408), and it is judged whether the communication is established (step 409). If it is judged that no communication is established, a request to start decoding the broadcast wave after the frequency change is made to the demodulator 19 (step 418), and the procedure proceeds to step 419.

If it is judged that the communication is established in step 409, predetermined authentication processing is performed with the server on the connection destination (step 410), and it is judged whether the authentication becomes successful (step 411). If it is judged that the authentication becomes successful, the reproduction of the contents distributed as the IP broadcast from the server on the connection destination is started (step 412), and the procedure proceeds to step 419. If it is judged that authentication becomes unsuccessful, a request to start decoding the broadcast wave after the frequency change is made to the demodulator 19 (step 413), and the procedure proceeds to step 419. Note that the reason for requiring authentication to receive the IP broadcast is because if the URL related to the IP broadcast is known, the IP broadcast can be received by using a PC from anywhere, leading to the provision of the IP broadcast to anywhere largely beyond the approved broadcasting service area as the broadcast service provider; therefore, a limitation is imposed so that the IP broadcast can be viewed only with a specific device. As authentication means, user authentication, device authentication and the like man be used.

In parallel to the processing of steps 410 to 413, the processing of steps 414 to 417 is performed. In step 414 to 417, it is confirmed whether the reception quality after the reception frequency change (step 404) is sufficiently ensured. That is to say, waiting for the state of the reception signal after the reception frequency change to stabilize (step 414), the reception signal level is acquired (step 415) and it is judged whether the reception signal level is a predetermined value or higher (step 416). If it is judged that the reception signal level is not the predetermined value or higher, a request to start decoding the broadcast wave after the frequency change is made to the demodulator 19 (step 417), and the procedure proceeds to step 419. If it is judged that the reception signal level is the predetermined value or higher, the broadcast after the frequency change is sufficiently viewable, and the current position is within the broadcasting service area, therefore, the corresponding IP broadcast is permitted to be viewed, thus the procedure proceeds to step 419 without requesting to start decoding the broadcast.

In step 419, it is judged whether a request to start decoding the broadcast wave is made (step 413, 417 or 418). If it is judged that the request is made, the sound source for audio output is set onto the demodulator 19 side (step 420). That is to say, in this case, since the IP broadcast corresponding to the broadcast after the frequency change is not permitted to be viewed, the speech signal from the demodulator 19 is output to an audio output controller 24 so that the broadcast is permitted to be viewed based on the broadcast wave of the broadcast after the frequency change. Further, the stop state of the audio output through the audio output controller 24 is released (step 421), and the processing of FIG. 4 is finished. In this case, the user can view the analog terrestrial radio broadcasting from the broadcast station 11.

If it is judged that no request to start decoding the broadcast wave is made in step 419, in order to permit the viewing of the IP broadcast corresponding to the reception broadcast after the frequency change, the sound source for the audio output is changed to the decoder of the IP broadcast (step 422), and the stop state of the audio output and the screen image output is released (steps 423 and 424). That is to say, the audio signal is output to the audio output controller 24 and the screen signal is output to the display controller 26 based on the content of the IP broadcast received from the communication unit 28, so as to permit the IP broadcast to be viewed. Thereafter, the processing of FIG. 4 is finished. In this case, the user can view the IP broadcast from the broadcast station 11.

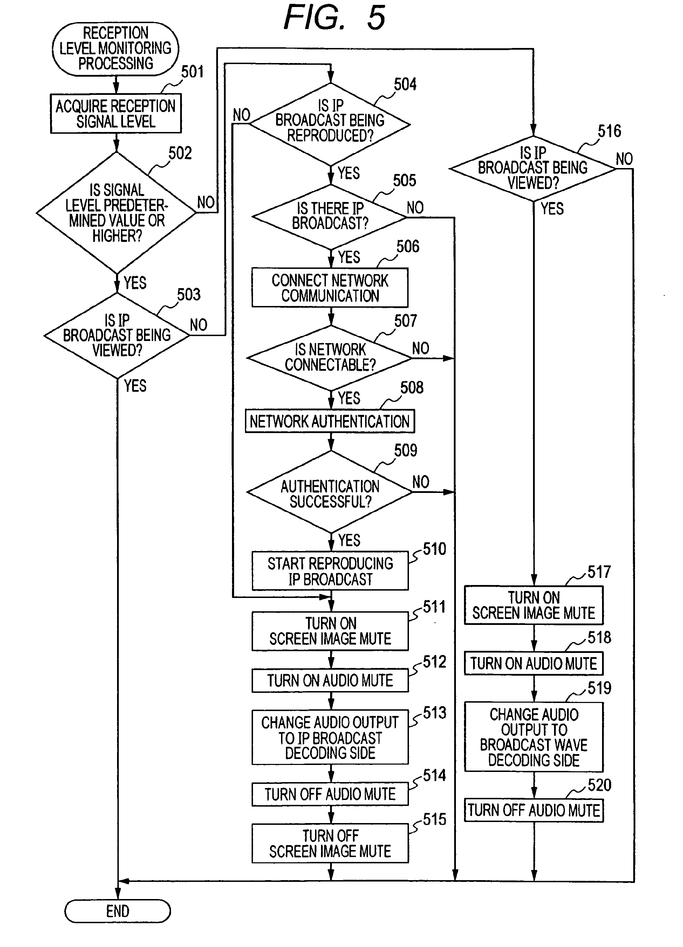

FIG. 5 is a flow chart showing reception level monitoring processing by the main controller 17. Following a predetermined program stored in the ROM 21, this processing is repeatedly performed at predetermined intervals after channel selection processing of FIG. 4. In the reception level monitoring processing, based on the reception signal level of the analog terrestrial radio broadcasting that is being received, processing of changing the target from which viewing is possible between the analog broadcasting and the corresponding IP broadcast is performed, as necessary.

When the processing is started, the main controller 17 first acquires the reception signal level from the demodulator 19 for the analog broadcasting that is being received (step 501). Next, it is judged whether the acquired reception signal level is the predetermined value or higher (step 502). If it is judged that the reception signal level is not the predetermined value or higher, it cannot be considered that the receivers 12 and 13 exist in the broadcasting service area for the analog broadcasting that is being received. Therefore, in this case, the corresponding IP broadcast is not permitted to be viewed. Then, it is judged whether the IP broadcast is being viewed (step 516). If it is judged that the IP broadcast is being viewed, the continuation of the viewing of the IP broadcast is not permitted, therefore, the target from which the viewing is permitted is changed to the analog broadcasting that is being received. That is to say, the output of the screen image and audio is stopped (steps 517 and 518), the sound source of the audio output is changed to the decoder of the broadcast wave, the stop of the audio output is released (step 519 and 520), and the processing of FIG. 5 is finished. If it is judged that the IP broadcast is not being viewed in step 516, the processing of FIG. 5 is finished directly. In this case, the viewing of the analog broadcasting is continued.

On the contrary, in step 502, if it is judged that the reception signal level is the predetermined value or higher, it can be considered that the receivers 12 and 13 exist in the broadcasting service area for the analog broadcasting that is being received. Therefore, in this case, the corresponding IP broadcast is permitted to be viewed. Then, it is judged whether the IP broadcast is being viewed (step 503). If it is judged that the IP broadcast is being viewed, the viewing of the IP broadcast may be continued directly, therefore, the processing of FIG. 5 is finished directly. If it is judged that the IP broadcast is not being viewed, it is judged whether the IP broadcast is being reproduced (step 504). If it is judged that the IP broadcast is being reproduced, only by changing the sound source of the audio output to the decoder of the IP broadcast, the viewing of the IP broadcast can be started, thus the procedure proceeds to step 511.

If it is judged that the IP broadcast is not being reproduced in step 504, it is checked whether other conditions for viewing the IP broadcast are met, and if the conditions are met, the reproduction based on the IP broadcast is started (steps 504 to 510). That is to say, it is judged whether there is a corresponding IP broadcast to the analog broadcasting that is being received (step 505). This judgment is made in the similar manner to the case of steps 405 to 407 of FIG. 4. If it is judged that the IP broadcast exists, in the similar manner to the case of steps 408 to 412 of FIG. 4, the communication with the IP broadcast server is established, authentication is performed, and the reproduction based on the IP broadcast is started (step 506 to 510). Thereafter, the procedure proceeds to step 511.

When the procedure proceeds to step 511, the output of the screen image and audio is stopped (steps 511 and 512), in the similar manner to the case of steps 422 and 424 of FIG. 4, in order to start viewing the IP broadcast corresponding to the analog broadcasting that is being received, the sound source of the audio output is changed to the decoder of the IP broadcast, the off-state of the audio output and the screen image output is released (steps 513 to 515), and the processing of FIG. 5 is finished. In this case, the viewing of the IP broadcast is started. If it is judged that the IP broadcast does not exist in step 505, if it is judged that no communication is established in step 507, and if it is judged that authentication becomes unsuccessful in step 509, the processing of FIG. 5 is finished directly. In this case, the viewing of the analog broadcasting is continued.

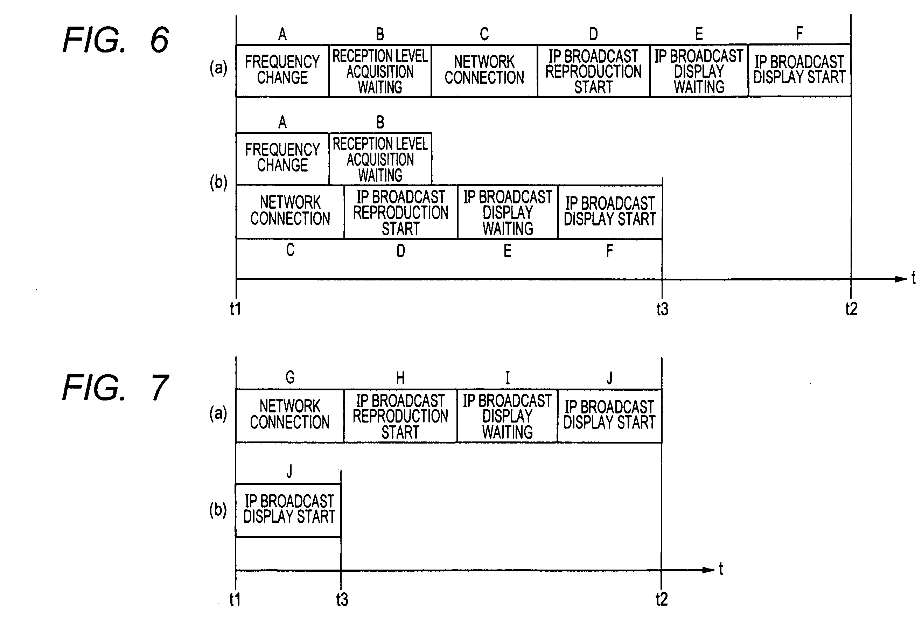

FIG. 6 shows an effect of the channel selection processing of FIG. 4. FIG. 6(a) shows the progress in which each processing in the channel selection processing is sequentially performed, and FIG. 6(b) shows the progress of each processing in the channel selection processing of the present embodiment of FIG. 4. When the channel selection processing is sequentially performed, as shown in FIG. 6(a), a frequency change period A from time t1 when the instruction to change the frequency is given (step 904) until the change of the frequency is completed, a reception level acquisition waiting period B after the completion of the frequency change until the reception level stabilizes (step 905), and the reception level is acquired (step 906), a network connection period C until the connection with the IP broadcast server is established and authentication is completed (steps 908 to 914), an IP broadcast reproduction start D (step 915), an IP broadcast display waiting E (steps 916 and 917) and an IP broadcast display start F (step 918) proceed in series, and complete, at which time t2, the viewing of the IP broadcast is started.

On the contrary, according to the channel selection processing of the present embodiment, as shown in FIG. 6(b), in parallel to the frequency change period A from time t1 when the instruction to change the frequency is given (step 404) until the change of the frequency is completed, and a reception level acquisition waiting period B (steps 414 and 415), the network connection period C (steps 405 to 411) and the IP broadcast reproduction start D (step 412) proceed. Thereafter, the IP broadcast display waiting E (steps 422 and 423) and an IP broadcast display start F (step 424) proceed, and complete, at which time t3, the viewing of the IP broadcast is started. Therefore, according to the channel selection processing of the present embodiment, it is possible to shorten the time from the channel selection operation to the viewing of the IP broadcast by the user.

FIG. 7 shows an effect of the reception level monitoring processing of FIG. 5. FIG. 7(a) shows the progress in which each processing in the reception level monitoring processing is sequentially performed, and FIG. 7(b) shows the progress of the reception level monitoring processing of the present embodiment of FIG. 5. If the reception signal level of the analog broadcasting is to the predetermined value or higher, and the IP broadcast is not being viewed, the viewing of the IP broadcast is started; however when each processing in the reception level monitoring processing is sequentially performed, as shown in FIG. 7(a), time t1 when it is judged that the IP broadcast can be viewed (step 104), a network connection period G (steps 107 to 110), an IP broadcast reproduction start H (step 111), an IP broadcast display waiting period I (step 112) and an IP broadcast display start J (steps 113 and 114) proceed in series, and complete, at which time t2, the viewing of the IP broadcast is started. On the contrary, according to the reception level monitoring processing of the present embodiment, as shown in FIG. 7(b), if reproduction has already been started of the IP broadcast which viewing is to be started, the viewing of the IP broadcast starts at time t3, when only the IP broadcast display start processing period J has elapsed (steps 511 to 515) since time t1 when it has been judged that viewing of the IP broadcast is possible (step 504). Therefore, according to the reception level monitoring processing of the present embodiment, if the reproduction of the IP broadcast has already been performed, it is possible to shorten the time from when it is judged that viewing of the IP broadcast is possible to when the IP broadcast becomes viewable.

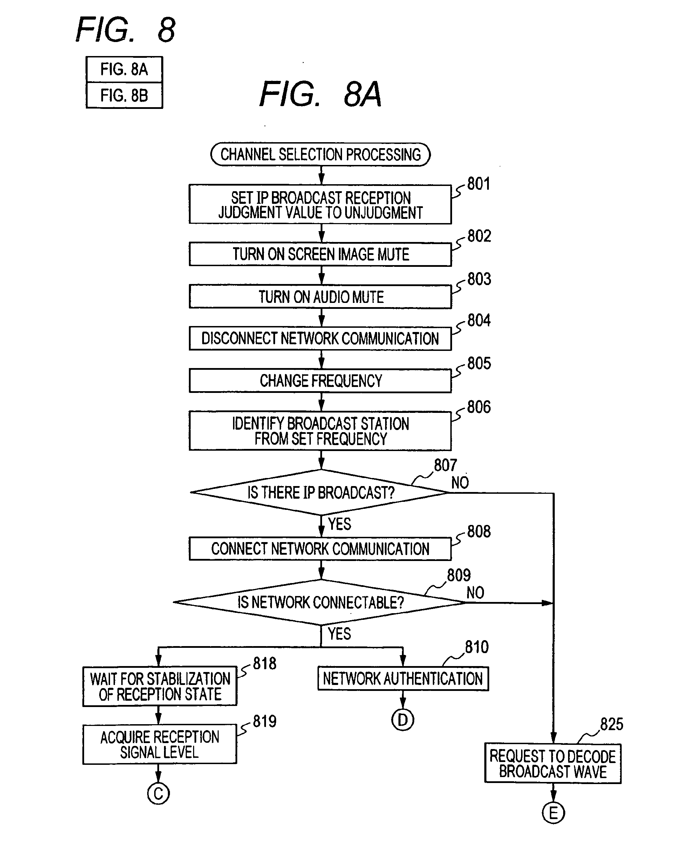

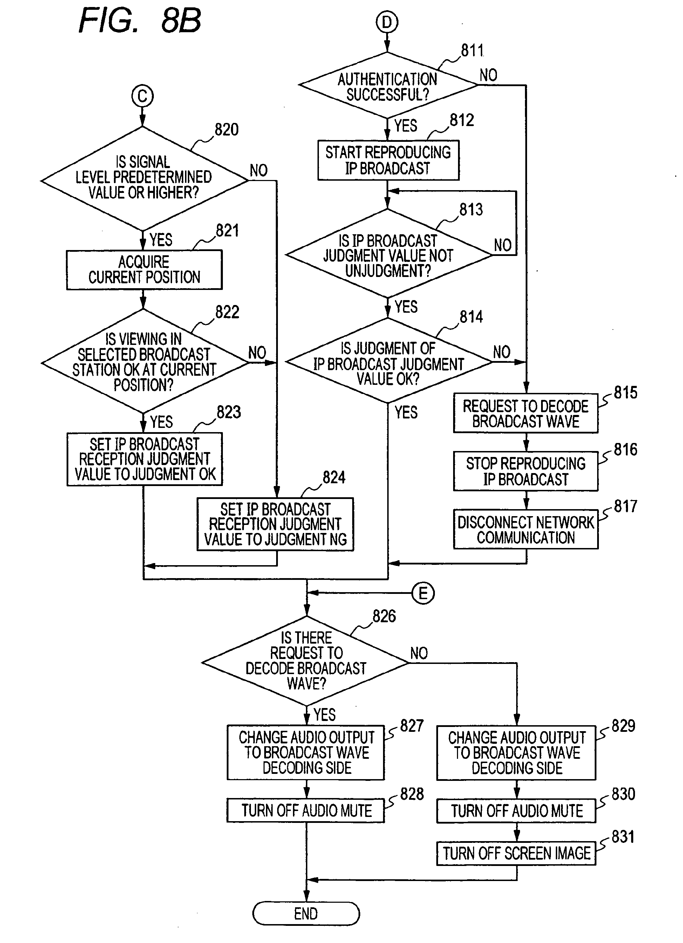

FIG. 8 is a flow chart showing another example of channel selection processing. In this channel selection processing, step 801 is added to the channel selection processing of FIG. 4, steps 405 and 406 of FIG. 4 are replaced with step 806, steps 416 and 417 of FIG. 4 are replaced with steps 820 to 824, and steps 813, 814, 816 and 817 are added. Steps 401 to 404 of FIG. 4 are the similar processing to steps 802 to 805 of FIG. 8, steps 407 to 413 of FIG. 4 are the similar processing to steps 807 to 812 and 815 of FIG. 8, steps 414 and 415 of FIG. 4 are the similar processing to steps 818 and 819 of FIG. 8, and steps 418 to 424 of FIG. 4 are the similar processing to steps 825 to 831 of FIG. 8. In this channel selection processing, as in the preset channel selection, since the frequency to be set is associated with the broadcast station in advance, the corresponding broadcast and the URL related to the corresponding IP broadcast are immediately identified from the set frequency. Then, the IP broadcast server is connected before it is checked whether the current position is within the broadcasting service area of the broadcast station.

In the channel selection processing of FIG. 8, the main controller 17 first sets the IP broadcast reception judgment value J to "unjudgment" (step 801). In the IP broadcast reception judgment value J, whether the judgment has been performed as to whether the viewing of the IP broadcast corresponding to the broadcast that is being received is permitted at the current position and the result of the judgment are stored. Here, as an initial value, a value indicating the unjudgment state in which judgment has not been performed yet, for example "0" is set.

Next, going through the processing similar to steps 401 to 404 of FIG. 4, it is instructed that the reception frequency is set to the frequency of the broadcast station selected by the user (steps 802 to 805), the broadcast station is identified based on the set frequency, and it is judged whether the broadcast service provider of the broadcast station provides the IP broadcast (steps 806 and 807). This judgment can be performed based on a predetermined database in which each broadcast frequency, the broadcast station that broadcasts at each broadcast frequency, and the URL indicating the resource of the IP broadcast provided by the broadcast service provider of each broadcast station are associated with one another and registered. That is to say, if the URL of the IP broadcast corresponding to the broadcast station at the set frequency is registered in the database, it can be judged that the IP broadcast is provided, on the other hand, if it is not registered, it can be judged that the IP broadcast is not provided. This database is built when the frequency of each broadcast station is preset by the user operation, for example.

Next, based on the URL corresponding to the selected broadcast station, in the similar manner to steps 408 to 409 of FIG. 4, the communication with the IP broadcast server is established (steps 808 and 809). If the communication is established, the processing of steps 810 to 817 and processing of steps 818 to 824 are performed parallelly. That is to say, in the processing of steps 818 to 824, first, in the similar manner to steps 414 to 416 of FIG. 4, it is judged whether the reception signal level is the predetermined value or higher (steps 818 to 820). If it is judged that the level is the predetermined value or higher, the current position is acquired, and it is judged whether viewing in the broadcast station selected by the user is permitted at the current position (steps 821 and 822). This judgment is performed by referring to the database in which each broadcasting service area is associated with a broadcast station in which viewing is permitted in each broadcasting service area. As this database, the URL database of FIG. 3 described above can be used. That is to say, if the selected broadcast station, for example, "CCC_FM" is associated with the broadcasting service area corresponding to the current position, for example, "Tokyo" and registered in the URL database, it can be judged that the viewing in the broadcast station is permitted at the current position. If it is judged that the viewing is permitted, the value of the IP broadcast reception judgment value J is set to the value indicating the result of the judgment, for example, "1" (step 823), and the procedure proceeds to step 826. If it is judged that the viewing is not permitted, the value of the IP broadcast reception judgment value J is set to the value indicating the judgment result, for example, "2" (step 824), and the procedure proceeds to step 826.

In processing of steps 810 to 817, first, in the similar manner to steps 410 to 413 of FIG. 4, if the authentication becomes successful, the reproduction of the IP broadcast is started (steps 810 to 812), on the other hand, if the authentication becomes unsuccessful, a request to decode the broadcast wave is made (steps 810, 811 and 815). If the reproduction of the IP broadcast is started, the procedure waits until the value of the IP broadcast judgment value J is no longer a value that indicates unjudgment, for example, "0" (step 813). That is to say, the procedure waits for the setting of the IP broadcast judgment value J in steps 823 or 824 to be completed. If it is detected that the value indicating unjudgment is changed, it is judged whether the IP broadcast judgment value J is the value indicating that the viewing is permitted, for example "1", or the value indicating that the viewing is not permitted, for example "2" (step 814). If it is judged that the value indicates that the viewing is permitted, the procedure proceeds to step 826 directly. If it is judged that the value indicates that the viewing is not permitted, a request to decode the broadcast wave is made (step 815), the reproduction of the IP broadcast is stopped (step 816), and the network communication with the IP broadcast server is disconnected (step 817), and then, the procedure proceeds to step 826.

On the contrary, if it is judged that the IP broadcast does not exist in step 807, and if it is judged that communication cannot be established in step 809, a request to decode the broadcast wave is made (step 825), and the procedure proceeds to step 826.

When the procedure proceeds to step 826, in the similar manner to steps 419 to 424 of FIG. 4, the viewing of the analog broadcasting or the IP broadcast with the broadcast wave is permitted (steps 826 to 831).

According to the channel selection of FIG. 8, since the processing from establishing a connection with the IP broadcast server to starting the reproduction of the IP broadcast is performed in parallel (steps 806 to 812) to the interval from when the instruction to change the frequency has been provided (step 805) to when the reception state after the frequency change has stabilized and setting of the IP broadcast reception judgment value J can be performed (steps 818 to 824), it is possible to shorten the time from when the channel selection operation is performed to when the analog broadcasting or the IP broadcast becomes viewable.

As described above, according to the present embodiment, it is possible to shorten the time from when the reception frequency is instructed to when viewing of the contents corresponding to the broadcast at the frequency becomes possible. Therefore, the user-friendliness of broadcast receivers can be improved.

Note that the tuner 18, the demodulator 19, the main controller 17 and the audio output controller 24 serve as broadcast reception units, the main controller signal 17 serves as a signal level judgment unit, the communication unit 28 and the main controller 17 serve as contents reception units, and the main controller 17 serves as a controller, respectively.

In addition, the present invention may be modified as necessary without limited to the embodiment. For example, in the above description, although a case where the analog terrestrial radio broadcasting is performed as a broadcast through the broadcast network 11a has been described, without limited thereto, the present invention can be applied to the case where the digital terrestrial radio broadcasting and the TV broadcast are performed.

### REFERENCE SIGNS LIST

- 11: broadcast station
- 11a: broadcast network
- 12: stationary type receiver
- 13: mobile type receiver
- 14: Internet
- 15: IP communication network
- 16: GPS satellite
- 17: main controller
- 18: tuner
- 19: demodulator
- 20: current position detector
- 21: ROM
- 22: RAM
- 23: speaker
- 24: audio output controller
- 25: display
- 26: display controller
- 27: operation unit
- 28: communication unit

## Claims

1. A reception device, comprising:
a broadcast reception unit to receive a broadcast at an instructed frequency, reproduce the broadcast, and output the result;
a signal level judgment unit to judge whether the signal level of the broadcast is a predetermined value or higher; and
a contents reception unit to receive contents distributed by a predetermined network, reproduce the contents, and output the result, the contents being permitted to be viewed under the condition that the signal level of the broadcast is a predetermined value or higher, wherein
after a reception frequency has been instructed, the contents reception unit performs the processing necessary for receiving and outputting the contents, in parallel to the period until judgment of the signal level has been made.

2. The reception device according to claim 1, wherein the processing necessary for receiving and outputting the contents includes processing for establishing the communication with a server that distributes the contents and performing predetermined authentication.

3. The reception device according to claim 1 or 2, wherein the processing necessary for receiving and outputting the contents includes processing from acquisition of information for accessing the contents to start of reproduction of the contents.

4. The reception device according to any one of claims 1 to 3, wherein the period further includes a period during which confirmation processing is performed as to whether the current position is within a broadcasting service area of the broadcast.

5. The reception device according to any one of claims 1 to 4, wherein the contents are distributed, scheduled to be distributed within the broadcasting service area of the broadcast by a broadcast service provider of the broadcast in parallel to the broadcast.

6. The reception device according to any one of claims 1 to 5, comprising
a controller for, after the contents reception unit starts reproducing and outputting the contents, when the signal level judgment unit judges that the signal level of the broadcast becomes lower than the predetermined value, causing the contents reception unit to stop the output of the contents while continuing the reception of the contents, and the broadcast reception unit to start the output, and then, when the signal level judgment unit judges that the signal level of the broadcast becomes the predetermined value or higher, causing the broadcast reception unit to stop the output, and the contents reception unit to start the output of the contents.

7. A reception device, comprising:
a broadcast reception unit to receive a broadcast at an instructed frequency, reproduce the broadcast, and output the result;
a signal level judgment unit to judge whether the signal level of the broadcast is a predetermined value or higher; and
a contents reception unit to receive contents distributed by a predetermined network, reproduce the contents, and output the result, the contents being permitted to be viewed under the condition that the signal level of the broadcast is a predetermined value or higher, and
a controller for, after the contents reception unit starts reproducing and outputting the contents, when the signal level judgment unit judges that the signal level of the broadcast becomes lower than the predetermined value, causing the contents reception unit to stop the output of the contents while continuing the reception of the contents, and the broadcast reception unit to start the output, and then, when the signal level judgment unit judges that the signal level of the broadcast becomes greater than or equal to the predetermined value, causing the broadcast reception unit to stop the output, and the contents reception unit to start the output of the contents.

8. A program for causing a computer to function as the reception device according to claims 1 to 7.

9. A reception method, comprising:
a broadcast reception step of receiving a broadcast at an instructed frequency, and reproducing the broadcast, and outputting the result;
a signal level judgment step of judging whether the signal level of the broadcast is a predetermined value or higher; and
a content reception step of receiving contents distributed by a predetermined network, reproducing the contents, and outputting the result, the contents being permitted to be viewed under the condition that the signal level of the broadcast is a predetermined value or higher, wherein
after the reception frequency has been instructed, in the content reception step, the processing necessary for receiving and outputting the contents is performed, in parallel to the period until judgment of the signal level has been made.
